# FASCICULE DE BREVET EUROPEEN

(11) **EP 1 833 600 B1**
(45) Date de publication et mention de la délivrance du brevet: **09.01.2013**
(21) Numéro de dépôt: 05817158.8
(22) Date de dépôt: 16.11.2005
(51) Int. Cl.: B01J 19/00, C10G 2/00

(54) **PROCEDE D'INTERRUPTION PROVISOIRE D'UNE REACTION DE TYPE FISCHER-TROPSCH DANS UN REACTEUR A LIT TRIPHASIQUE**
VERFAHREN ZUR VORÜBERGEHENDEN UNTERBRECHUNG EINER FISCHER-TROPSCH-REAKTION IN EINEM DREIPHASENBETTREAKTOR
METHOD FOR TEMPORARILY INTERRUPTING A FISCHER-TROPSCH REACTION IN A THREE-PHASE BED REACTOR

(30) Priorité: 03.12.2004 FR 0412926
(43) Date de publication de la demande: 19.09.2007
(73) Titulaire: Institut Français du Pétrole, 92852 Rueil Malmaison Cedex (FR); ENI S.p.A., 00144 Rome (IT)
(72) Inventeur: MARION, Marie-Claire, F-69390 Vernaison (FR); HUGUES, François, F-69390 Charly (FR)
(86) Numéro de dépôt international: PCT/FR2005/002848
(87) Numéro de publication internationale: WO 2006/061471

(56) Documents cités:
- WO-A-02/096834
- GB-A- 2 223 237
- US-A- 5 728 918
- US-B1- 6 512 017

## Description

### Domaine de l'invention

L'invention concerne le domaine des procédés de production d'hydrocarbures liquides comportant une étape de synthèse Fischer-Tropsch. Elle concerne, plus particulièrement, un procédé d'interruption provisoire d'une réaction de type Fischer-Tropsch comportant une étape d'interruption de la réaction et une étape de redémarrage de ladite réaction.

### Art antérieur

La synthèse d'hydrocarbures à partir d'un mélange comportant du monoxyde de carbone et de l'hydrogène, plus communément appelé gaz de synthèse, est connue depuis longtemps.

On peut citer, en particulier, les travaux de F. Fischer et H. Tropsch qui, dès 1923, ont donné leur nom à cette transformation chimique, bien connue sous le nom de synthèse Fischer-Tropsch. La synthèse Fischer-Tropsch est une réaction qui permet de synthétiser des hydrocarbures liquides paraffiniques, oléfiniques et/ou des dérivés oxygénés à partir d'un gaz de synthèse, ce dernier étant par exemple obtenu à partir de gaz naturel ou de charbon. Cette réaction, exploitée industriellement en Europe pendant la seconde guerre mondiale et également en Afrique du Sud depuis les années 1950, a retrouvé un spectaculaire regain d'intérêt depuis les années 1980 à 1990, suite aux évolutions des coûts du pétrole et du gaz, mais aussi pour des aspects environnementaux.

Une des préoccupations de l'homme du métier mettant en oeuvre de tels procédés est de faire face à tout aléa en interrompant momentanément le processus réactionnel, tout en évitant d'entamer les performances du catalyseur mise en oeuvre lors de la remise en route dudit processus.

Le brevet américain US 6,512,017 présente une méthode de maniement d'un catalyseur pour un réacteur comprenant un catalyseur en suspension couramment connu dans les termes anglo-saxons de « slurry bed reactor » ou plus simplement « slurry », incluant le chargement du catalyseur dans le réacteur, le démarrage, l'arrêt et le déchargement dudit catalyseur lorsqu'une réutilisation ultérieure de ce dernier est envisagée. Il est indiqué que ce type de réacteur doit être opéré avec le moins possible d'interruptions afin de maintenir à un niveau acceptable la performance du catalyseur et de minimiser sa dégradation dans le temps. Plus particulièrement, ce brevet décrit des procédures d'arrêt et de redémarrage en jouant sur l'alimentation en gaz de synthèse, la température du réacteur et le recyclage interne du réacteur.

Un objet de l'invention est de fournir un procédé d'interruption provisoire de la réaction de type Fischer-Tropsch sans avoir à décharger et recharger le catalyseur.

Un autre objet de l'invention est de proposer un procédé permettant, lors d'une interruption provisoire de la réaction, de maintenir la stabilité des performances du catalyseur Fischer-Tropsch, c'est à dire :
- de maintenir les propriétés catalytiques, telles que, par exemple, l'activité et la sélectivité, et
- de maintenir les propriétés mécaniques, en particulier de minimiser l'attrition du catalyseur.

Un autre objet de l'invention est de proposer un procédé d'interruption provisoire permettant un redémarrage rapide de la réaction Fischer-Tropsch.

### Résumé de l'invention

L'invention porte sur un procédé d'interruption provisoire d'une réaction Fischer-Tropsch mise en oeuvre dans un réacteur à lit triphasique, le plus souvent un réacteur comprenant un catalyseur en suspension (« slurry ») ou de type colonne à bulles (slurry bubble column reactor selon la terminologie anglo-saxonne), et permettant l'arrêt de la réaction sans déchargement du catalyseur, le maintien des performances et de la stabilité dans le temps du catalyseur à un niveau acceptable et le redémarrage rapide de la réaction.

Le procédé de la présente invention comporte une étape d'interruption de la réaction et une étape de redémarrage de ladite réaction, pendant lesquelles on maintient les particules solides de catalyseur en suspension dans la zone réactionnelle. Lors de l'étape d'interruption, on arrête l'alimentation de la charge, et on établit une couverture d'un gaz inhibant comportant moins de 1 % en volume d'hydrogène et au moins 5 % en volume d'au moins un composé inhibant choisi dans le groupe formé par le monoxyde de carbone et l'eau. Lors de l'étape de redémarrage, on établit une couverture d'un gaz activant ayant une teneur en hydrogène d'au moins 20 % en volume, et on redémarre l'alimentation de la charge.

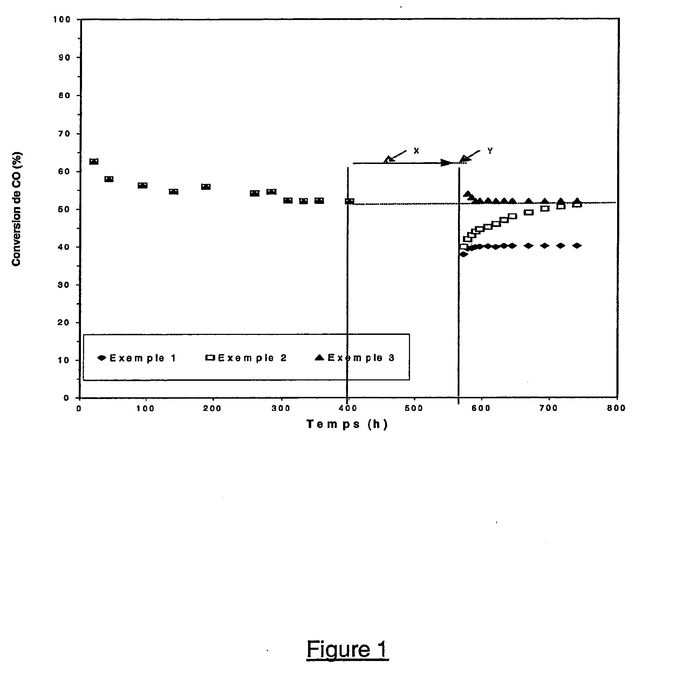

### Brève description de la figure 1

La Figure 1 représente, dans le cadre des exemples 1 à 3, une illustration de l'évolution de la conversion du monoxyde de carbone au cours du temps pendant la phase réactionnelle, la phase d'interruption de la réaction et la phase de redémarrage.

### Description détaillée de l'invention

L'invention porte donc sur un procédé d'interruption provisoire d'une réaction de type Fischer-Tropsch mise en oeuvre sur une charge comportant au moins du monoxyde de carbone et de l'hydrogène, dans une zone réactionnelle à lit triphasique comportant une phase liquide, une phase gazeuse et des particules solides de catalyseur maintenues en suspension, ledit procédé comprenant une étape a) d'interruption de la réaction et une étape b) de redémarrage de ladite réaction, pendant lesquelles on maintient les particules solides de catalyseur en suspension dans la zone réactionnelle,
a) lors de l'étape d'interruption de la réaction :
   - on arrête l'alimentation de la charge, et
   - on établit, dans la zone réactionnelle, une couverture d'un gaz inhibant comportant moins de 1 % en volume d'hydrogène et au moins 5 % en volume de monoxyde de carbone; et
b) lors de l'étape de redémarrage de la réaction :
   - on établit, dans la zone réactionnelle, une couverture d'un gaz activant, et
   - on redémarre l'alimentation de la charge.

Par lit triphasique on entend une zone comportant une phase liquide, une phase gazeuse et une phase solide, en l'occurrence le catalyseur, dans lesquels le solide est maintenu en suspension. Il peut s'agir, par exemple, d'un lit fluidisé ou d'un lit bouillonnant.

De préférence, le lit triphasique est un lit de type « slurry ». Ce type de lit correspond par exemple, mais pas uniquement, à celui mis en oeuvre dans un réacteur de type colonne à bulles, dans lequel les particules solides sont généralement réparties sur toute la hauteur du lit. Un autre type de réacteur « slurry » correspond aux autoclaves parfaitements agités au moyen, généralement, d'une agitation mécanique.

L'association de l'étape a) d'interruption de la réaction et de l'étape b) de redémarrage de ladite réaction, telles qu'elles ont été décrites ci-dessus, permet de maintenir constantes les performances catalytiques du catalyseur lors du redémarrage de la réaction, c'est à dire sensiblement identiques à celles du catalyseur avant l'interruption de la réaction. Cette association des deux étapes d'interruption et de redémarrage permet également d'éviter la dégradation du catalyseur durant cette période d'interruption de la réaction, d'augmenter la vitesse de redémarrage de la réaction, et de minimiser la durée de la phase transitoire de redémarrage.

Il a été trouvé que la nature du composé inhibant les réactions et donc les sites actifs du catalyseur ainsi que sa teneur dans le gaz inhibant ont une influence sur la protection des sites actifs des particules solides de catalyseur. Sans être lié à une quelconque théorie le monoxyde de carbone, présentent, à priori, une affinité pour les sites catalytiques et a tendance à s'adsorber très facilement sur les sites catalytiques des particules solides de catalyseur. Ainsi, il apparaît que ce composé inhibant présente, quand il est utilisé conformément au procédé de l'invention, une fonction protectrice permettant d'éviter, ou de minimiser, toute dégradation irréversible des sites actifs du catalyseur.

De surcroît, il a été observé que les sites actifs ayant été provisoirement inhibés, ou neutralisés, et protégés par l'exposition à ces composés inhibants sont plus facilement, ou plus rapidement, réactivés dès qu'ils sont mis en présence d'hydrogène. De plus, les catalyseurs ainsi réactivés ont montré des performances en rapport avec les performances obtenues avant l'interruption de la réaction, voire même supérieures.

Selon l'invention, la teneur en composés inhibants dans le gaz inhibant est supérieure à 5% en volume. De préférence, la teneur en composés inhibants dans le gaz inhibant est supérieure à 10 % en volume, de manière plus préférée supérieure à 20 % en volume.

La couverture de gaz inhibant peut être maintenue à une pression absolue allant de 0,1 à 10 MPa, de préférence allant de 1 à 5 MPa. Le rapport entre la pression partielle des composés inhibants et la pression de la couverture de gaz inhibant peut être avantageusement supérieur à 0,05, de préférence supérieur à 0,1, de manière plus préférée supérieur à 0,2.

Le gaz inhibant de l'invention peut éventuellement comporter un mélange d'eau et de monoxyde de carbone.

L'étape a) d'interruption de la réaction comprend, selon le procédé de l'invention, l'arrêt de l'alimentation de la charge et l'établissement d'une couverture de gaz inhibant. Ces deux sous étapes de l'étape a) peuvent être réalisées dans n'importe quel ordre ou simultanément.

Il existe plus d'une façon de mettre en oeuvre l'étape a) du procédé de l'invention. A titre d'exemple, l'établissement de la couverture de gaz inhibant peut être réalisé par l'injection d'un gaz dont la composition initiale est en conformité avec une teneur en hydrogène inférieure à 1 % en volume et une teneur en composé inhibant d'au moins 5 % en volume. Cette couverture de gaz inhibant peut également être établie par un recyclage d'un effluent gazeux, de la zone réactionnelle dans des conditions telles que l'hydrogène est consommé par la réaction plus rapidement que le monoxyde de carbone, ce qui entraîne l'établissement d'une couverture de gaz dont la composition est en conformité avec une teneur en hydrogène inférieure à 1 % en volume et une teneur en composé inhibant d'au moins 5 % en volume.

Pendant l'étape a), le maintien des particules solides de catalyseur en suspension dans la zone réactionnelle peut être réalisé :
- par le flux de la charge, avant l'arrêt de son alimentation,
- par le flux de gaz inhibant, et/ou
- le cas échéant, par un recyclage interne d'au moins une partie d'un effluent gazeux dans une partie inférieure de la zone réactionnelle.

Selon un mode de réalisation de l'invention, lors de l'étape a) :
- on arrête l'alimentation de la charge,
- on envoie le gaz inhibant dans la zone réactionnelle, et
- on maintient les particules solides de catalyseur en suspension dans la zone réactionnelle à l'aide dudit gaz inhibant.

Le procédé de l'invention peut avantageusement comporter un recyclage interne ou externe au réacteur, dans lequel au moins une partie de la phase gazeuse de la zone réactionnelle est recyclée dans une partie inférieure de ladite zone réactionnelle.

Généralement, la phase gazeuse issue de la zone réactionnelle est envoyée dans une étape de condensation, puis une étape de séparation. Le recyclage consiste alors à recycler une partie au moins de l'effluent gazeux issu de l'étape de séparation dans une partie inférieure de la zone réactionnelle. Ce recyclage est généralement externe, il est toutefois possible de réaliser une séparation interne à la zone réactionnelle et un recyclage interne à ladite zone.

Selon un mode de réalisation d'un procédé comportant un recyclage (interne ou externe), lors de l'étape a) :
- on arrête l'alimentation de la charge,
- on envoie le gaz inhibant dans la zone réactionnelle tout en maintenant le recyclage de la phase gazeuse, ou de l'effluent gazeux, dans une partie inférieure de la zone réactionnelle jusqu'à l'obtention d'une couverture de gaz inhibant, et
- on maintient les particules solides de catalyseur en suspension grâce au maintien du recyclage dudit gaz inhibant, dans une partie inférieure de la zone réactionnelle.

Selon un autre mode de réalisation d'un procédé comportant un recyclage (interne ou externe), lors de l'étape a) :
- on ajuste, le cas échéant, le rapport de la quantité d'hydrogène sur la quantité de monoxyde de carbone dans la charge, H2/CO, à une valeur inférieure à celle du rapport d'usage de la réaction,
- on arrête l'alimentation de la charge tout en maintenant le recyclage de la phase gazeuse, ou de l'effluent gazeux, de la zone réactionnelle dans la partie inférieure de ladite zone réactionnelle jusqu'à l'obtention d'une couverture de gaz inhibant, et
- on maintient les particules solides de catalyseur en suspension grâce au maintien du recyclage dudit gaz inhibant, dans une partie inférieure de la zone réactionnelle.

Dans ce type de procédé, on définit généralement le rapport d'usage comme étant le rapport stoechiométrie entre l'hydrogène et le monoxyde de carbone consommés par la synthèse Fischer-Tropsch. Le rapport d'usage est généralement variable. Ce rapport peut dépendre de la nature du catalyseur ainsi que des conditions opératoires utilisées lors de la synthèse. Ce rapport d'usage peut évoluer dans le temps, en fonction par exemple de la stabilité du catalyseur. Ce rapport d'usage peut également traduire la sélectivité du catalyseur. Par exemple, dans le cas d'un procédé Fischer-Tropsch utilisant un catalyseur à base de cobalt et visant à produire des hydrocarbures paraffiniques à longues chaînes, le rapport d'usage est généralement compris entre 2,0 et 2,3.

L'amplitude de la réduction du rapport H2/CO réalisée lors de l'étape a) peut influer sur la vitesse d'obtention d'une couverture de gaz dont la composition est en conformité avec une teneur en hydrogène inférieure à 1 % en volume et une teneur en composé inhibant d'au moins 5 % en volume. Plus l'amplitude de cette réduction du rapport H2/CO est importante, plus rapidement la couverture de gaz inhibant est obtenue.

L'étape b) de redémarrage de la réaction comprend, selon le procédé de l'invention, l'établissement d'une couverture d'un gaz activant et le redémarrage de l'alimentation de la charge. Ces sous étapes de l'étape b) sont généralement réalisées dans cet ordre.

De préférence, l'établissement de la couverture de gaz activant et le redémarrage de l'alimentation de la charge sont deux sous-étapes successives de l'étape b). Il est toutefois possible d'utiliser la charge (gaz de synthèse) comme gaz activant. L'étape b) ne comprend alors aucune sous étape, mais seulement une réintroduction progressive de ladite charge. La couverture de gaz activant peut être maintenue pendant une durée qui peut aller jusqu'à plusieurs jours, avant de redémarrer l'alimentation de la charge. Généralement, la durée du maintien de la couverture de gaz activant est liée à la durée de l'étape a) d'interruption de la réaction. Cette durée du maintien de la couverture de gaz activant est, de préférence, comprise entre 1/100^{ème} et ½ de la durée d'interruption de la réaction. Elle est généralement comprise entre 0,1 et 100 heures.

Pendant l'étape b), le maintien des particules solides de catalyseur en suspension dans la zone réactionnelle peut être réalisé :
- par le flux de gaz activant,
- par le flux de la charge, après la remise en service de son alimentation, et/ou
- le cas échéant, par recyclage interne ou externe d'au moins une partie de la phase gazeuse dans une partie inférieure de la zone réactionnelle.

De préférence, la teneur en hydrogène dans le gaz activant de l'étape b) est supérieure à 20 % en volume, de manière plus préférée supérieure à 50 % en volume, de manière encore plus préférée supérieure à 80 % en volume.

Pendant les étapes a) et b), la vitesse volumique horaire, WH, c'est à dire le rapport entre le débit volumique horaire de gaz (charge, gaz inhibant ou gaz activant) et le volume de catalyseur, peut être comprise entre 1 et 400 h⁻¹. Le débit de gaz doit généralement être suffisant pour maintenir en suspension le catalyseur dans la zone réactionnelle. En fonction de la densité des particules solides de catalyseur et de leurs concentrations, la vitesse minimale de gaz est généralement supérieure à 1 cm/s, de préférence supérieure à 5 cm/s.

Les conditions de température et de pression dans la zone réactionnelle avant l'interruption ou après le redémarrage sont variables et adaptées au catalyseur mis en oeuvre.

La température de réaction, c'est à dire avant l'étape a) ou après l'étape b), peut être généralement comprise entre 200 et 400°C.

Selon un mode particulier du procédé de l'invention, lors de l'étape a), on abaisse la température dans la zone réactionnelle d'une valeur initiale à une valeur supérieure à 180°C, et lors de l'étape b), on augmente la température dans la zone réactionnelle à une valeur d'au moins 10°C et le plus souvent supérieure de 15°C à 25°C à la valeur initiale.

De préférence, lors de l'étape a), la température dans la zone réactionnelle est abaissée à une valeur supérieure à 180°C et inférieure ou égale à 220 °C.

La pression de réaction, c'est à dire avant l'étape a) ou après l'étape b), peut être, quant à elle, comprise entre 0,1 et 10 MPa. Cette pression peut être maintenue au cours de l'étape a) ou b).

Toutefois, généralement, la pression dans la zone réactionnelle, lors des étapes a) et b), est généralement abaissée à une pression inférieure à la pression de réaction, de préférence d'au moins 0,05 MPa, voire 0,1 MPa. Il est également possible d'augmenter, lors de l'étape b), la pression dans la zone réactionnelle, de préférence d'au moins 0,05 MPa.

Le catalyseur mis en oeuvre dans la zone réactionnelle est généralement tout solide catalytique connu de l'homme du métier permettant de réaliser la synthèse Fischer-Tropsch. De préférence, le catalyseur est à base de cobalt ou de fer, de manière plus préférée à base de cobalt.

Le catalyseur mis en oeuvre dans la zone réactionnelle est généralement un catalyseur supporté. Le support peut être, à titre d'exemple, à base d'alumine, de silice ou de titane.

La zone réactionnelle peut également comporter, en outre, un agent anti-mousse à base de silicone.

Le procédé selon l'invention est tout à fait compatible avec l'utilisation d'un agent anti-mousse, qui peut avoir un effet rédhibitoire et parfois irréversible sur les performances du catalyseur. Le procédé de l'invention permet ainsi de maintenir les propriétés catalytiques du catalyseur, lors d'une interruption de la réaction, et permet de retrouver très rapidement les performances catalytiques, lors du redémarrage de la réaction, même en présence d'un agent anti-mousse.

### Exemple 1 (non conforme à l'invention)

On réalise une réaction de synthèse Fischer-Tropsch dans un réacteur de type autoclave de volume égal à 1l contenant 60 cm³ de catalyseur et avec un gaz de synthèse comportant de l'hydrogène et du monoxyde de carbone. La réaction Fischer-Tropsch est mise en oeuvre à 220°C et 2 MPa, en présence d'un solide catalytique contenant 12% poids de cobalt sur un support silice-alumine et d'un agent anti-mousse à base de silicone de la gamme des produits ©Rhodorsil commercialisés par RHODIA. La vitesse spatiale est de 1700 litres par litre de catalyseur et par heure (Nl/l.h).

Après 400 heures d'opération, on interrompt la réaction Fischer-Tropsch (partie repérée par la flèche "X" dans la figure 1). Pendant cette phase d'interruption de la réaction, l'alimentation du réacteur en gaz de synthèse est arrêtée et simultanément remplacée par l'alimentation, pendant une semaine, d'un gaz H2/N2 comportant 50 % en volume d'hydrogène et 50 % en volume d'azote. Le mélange dans la zone réactionnelle, contenant le catalyseur Fischer-Tropsch, est maintenu à une température de 200 °C, une pression de 2 MPa et une vitesse spatiale de 1200 Nl/l.h.

A l'issue de cette période d'arrêt, on redémarre la réaction Fischer-Tropsch en remplaçant l'alimentation en gaz H2/N2 par le gaz de synthèse et en augmentant la vitesse spatiale jusqu'à 1700 Nl/l.h. La température du réacteur est progressivement augmentée jusqu'à 220°C en 3 heures.

Les performances du catalyseur sont suivies par l'analyse de l'effluent gazeux en sortie du réacteur, ce qui permet de déterminer le niveau de conversion du monoxyde de carbone, l'activité et les sélectivités en méthane et en hydrocarbures ayant un nombre d'atomes de carbone supérieur ou égal à 5, C5+.

La courbe 1 de la Figure 1, représentant l'évolution de la conversion du monoxyde de carbone au cours du temps, montre que cette conversion est considérablement réduite au redémarrage de la réaction à l'issue de la période d'arrêt. Cette conversion se maintient à un niveau réduit bien après le redémarrage. Cette courbe témoigne d'une dégradation marquée et irréversible du catalyseur.

Par ailleurs, le tableau 1 ci-après, montre que l'activité et la sélectivité en C5+ sont irrémédiablement dégradées.

### Exemple 2 (conforme à l'invention)

Les conditions initiales de synthèse de l'exemple 1 sont reproduites.

Après 400 heures d'opération, on interrompt la réaction Fischer-Tropsch (partie repérée par la flèche "X" dans la figure 1). Pendant cette phase d'interruption de la réaction, l'alimentation du réacteur en gaz de synthèse est arrêtée et simultanément remplacée par l'alimentation, pendant une semaine, d'un gaz inhibant CO/N2 comportant 50 % en volume de monoxyde de carbone et 50 % en volume d'azote. De la même façon que dans l'exemple 1, le mélange dans la zone réactionnelle, contenant le catalyseur Fischer-Tropsch, est maintenu à une température de 200 °C, une pression de 2 MPa et une vitesse spatiale de 1200 Nl/l.h.

A l'issue de cette période d'arrêt, on redémarre la réaction Fischer-Tropsch en remplaçant progressivement (en environ 2 heures) l'alimentation en gaz CO/N2 par du gaz de synthèse et en augmentant la vitesse spatiale jusqu'à 1700 Nl/l.h. La température du réacteur est progressivement augmentée jusqu'à 220°C en 3 heures.

De la même façon que dans l'exemple 1, les performances du catalyseur sont suivies par l'analyse de l'effluent gazeux en sortie du réacteur.

La courbe 2 de la Figure 1, représentant l'évolution de la conversion du monoxyde de carbone au cours du temps, montre que cette conversion est, pendant la phase de redémarrage, initialement réduite avant de retrouver progressivement son niveau initial après plus de cent heures après le redémarrage.

Le tableau 1 montre une perte d'activité et de sélectivité en C5+ au début du redémarrage, mais l'activité et la sélectivité retrouvent un niveau équivalent à celui d'avant l'interruption de la réaction un peu plus d'une centaine d'heures après le redémarrage.

### Exemple 3 (conforme à l'invention)

Les conditions initiales de synthèse de l'exemple 1 sont reproduites dans le même réacteur et avec le même catalyseur.

Après 400 heures d'opération, on interrompt la réaction Fischer-Tropsch (partie repérée par la flèche "X" dans la figure 1) de la même façon que dans l'exemple 2, c'est à dire avec un gaz inhibant CO/N2 comportant 50 % en volume de monoxyde de carbone et 50 % en volume d'azote. De la même façon que dans les exemples 1 et 2, le mélange dans la zone réactionnelle, contenant le catalyseur Fischer-Tropsch, est maintenu à une température de 200 °C et une pression de 2 MPa et une vitesse spatiale de 1200 Nl/l.h

A l'issue de cette période d'arrêt, on redémarre la réaction Fischer-Tropsch en remplaçant l'alimentation en gaz CO/N2 par un gaz activant comportant essentiellement de l'hydrogène et ceci pendant une durée de 5 heures (traitement supplémentaire repéré par les pointillés "Y" sur la figure 1).

On procède ensuite à l'alimentation du gaz de synthèse, la température du réacteur étant progressivement augmentée jusqu'à 220°C en 3 heures et la vitesse spatiale jusqu'à 1700 Nl/l.h.

De la même façon que dans les exemples 1 et 2, les performances du catalyseur sont suivies par l'analyse de l'effluent gazeux en sortie du réacteur.

La courbe 3 de la Figure 1, représentant l'évolution de la conversion du monoxyde de carbone au cours du temps, montre que cette conversion est, dès le début de la phase de redémarrage, à un niveau équivalent à celui avant l'interruption de la réaction.

Par ailleurs, le tableau 1 montre que l'activité et la sélectivité ne se sont pas dégradés, et que le redémarrage est réalisé rapidement avec une période transitoire minimisée.

**Tableau 1**

| | | Exemple 1 | Exemple 2 | Exemple 3 |
|---|---|---|---|---|
| Activité (u.a.) | | | | |
| | 400 h | 1 | 1 | 1 |
| | 600 h | 0,77 | 0,86 | 1 |
| | 700 h | 0,77 | 0,96 | 1 |

| Sélectivité méthane (u.a.) | | | | |
|---|---|---|---|---|
| | 400 h | 1 | 1 | 1 |
| | 600 h | 1,5 | 1,4 | 1 |
| | 700 h | 1,5 | 1,05 | 1 |

| Sélectivité C5+ (u.a.) | | | | |
|---|---|---|---|---|
| | 400 h | 1 | 1 | 1 |
| | 600 h | 0,83 | 0,89 | 1 |
| | 700 h | 0,83 | 0,98 | 1 |

| | | | | |
|---|---|---|---|---|
| ré-injection du gaz de synthèse (redémarrage de la réaction FT) à environ 570 h (568 h dans les exemples 1 et 2, 573 h dans l'exemple 3). | | | | |

## Revendications

1. Procédé d'interruption provisoire d'une réaction de type Fischer-Tropsch mise en oeuvre sur une charge comportant au moins du monoxyde de carbone et de l'hydrogène, dans une zone réactionnelle à lit triphasique comportant une phase liquide, une phase gazeuse et des particules solides de catalyseur maintenues en suspension, ledit procédé comprenant une étape a) d'interruption de la réaction et une étape b) de redémarrage de ladite réaction, pendant lesquelles on maintient les particules solides de catalyseur en suspension dans la zone réactionnelle,
a) lors de l'étape d'interruption de la réaction :
- on arrête l'alimentation de la charge, et
- on établit, dans la zone réactionnelle, une couverture d'un gaz inhibant comportant moins de 1 % en volume d'hydrogène et au moins 5 % en volume de monoxyde de carbone, et
b) lors de l'étape de redémarrage de la réaction :
- on établit, dans la zone réactionnelle, une couverture d'un gaz activant, et
- on redémarre l'alimentation de la charge.

2. Procédé selon la revendication 1, dans lequel le lit triphasique est un lit de type « slurry ».

3. Procédé selon l'une quelconque des revendications 1 ou 2, dans lequel la teneur en composés inhibants dans le gaz inhibant est supérieure à 10 % en volume.

4. Procédé selon l'une quelconque des revendications 1 à 3, dans lequel, lors de l'étape a) :
- on arrête l'alimentation de la charge,
- on envoie le gaz inhibant dans la zone réactionnelle, et
- on maintient les particules solides de catalyseur en suspension dans la zone réactionnelle à l'aide dudit gaz inhibant.

5. Procédé selon l'une quelconque des revendications 1 à 4, dans lequel au moins une partie de la phase gazeuse de la zone réactionnelle est recyclée dans une partie inférieure de ladite zone réactionnelle.

6. Procédé selon la revendication 5, dans lequel, lors de l'étape a) :
- on arrête l'alimentation de la charge,
- on envoie le gaz inhibant dans la zone réactionnelle tout en maintenant le recyclage de la phase gazeuse dans une partie inférieure de la zone réactionnelle jusqu'à l'obtention d'une couverture de gaz inhibant, et
- on maintient les particules solides de catalyseur en suspension grâce au maintien du recyclage dudit gaz inhibant, dans une partie inférieure de la zone réactionnelle.

7. Procédé selon la revendication 5, dans lequel, lors de l'étape a) :
- on ajuste, le cas échéant, le rapport de la quantité d'hydrogène sur la quantité de monoxyde de carbone dans la charge, H₂/CO, à une valeur inférieure à celle du rapport d'usage de la réaction compris entre compris entre 2,0 et 2,3,
- on arrête l'alimentation de la charge tout en maintenant le recyclage de la phase gazeuse de la zone réactionnelle dans la partie inférieure de ladite zone réactionnelle jusqu'à l'obtention d'une couverture de gaz inhibant, et
- on maintient les particules solides de catalyseur en suspension grâce au maintien du recyclage dudit gaz inhibant dans une partie inférieure de la zone réactionnelle.

8. Procédé selon l'une quelconque des revendications 1 à 7, dans lequel l'établissement de la couverture de gaz activant et le redémarrage de l'alimentation de la charge sont deux étapes successives de l'étape b).

9. Procédé selon l'une quelconque des revendications 1 à 8, dans lequel la teneur en hydrogène dans le gaz activant de l'étape b) est d'au moins 20 % en volume.

10. Procédé selon l'une quelconque des revendications 1 à 9, dans lequel, lors de l'étape a), on abaisse la température dans la zone réactionnelle d'une valeur initiale, c'est-à-dire de la température avant l'étape a) comprise entre 200°C et 400°C, à une valeur supérieure à 180°C, et, lors de l'étape b), on augmente la température dans la zone réactionnelle à une valeur supérieure d'au moins 10°C à la valeur initiale.

11. Procédé selon la revendication 10 dans lequel, lors de l'étape a), la température dans la zone réactionnelle est abaissée à une valeur supérieure 180°C et inférieure ou égale à 220 °C.

12. Procédé selon l'une quelconque des revendications 1 à 11 dans lequel le catalyseur est à base de cobalt.

13. Procédé selon l'une quelconque des revendications 1 à 12 dans lequel la zone réactionnelle comporte, en outre, un agent anti-mousse à base de silicone.

## Claims

1. A process for temporarily interrupting a Fischer-Tropsch type reaction carried out on a feed comprising at least carbon monoxide and hydrogen in a three-phase reaction zone comprising a liquid phase, a gas phase and solid catalyst particles maintained in suspension, said process comprising a step a) for interrupting the reaction and a step b) for restarting said reaction, during which the solid catalyst particles are maintained in suspension in the reaction zone;
a) during the step for interrupting the reaction,
■ supply of the feed is stopped; and
■ a blanket of an inhibiting gas comprising less than 1% by volume of hydrogen and at least 5% by volume of carbon monoxide is established; and
b) during the reaction restart step:
■ in the reaction zone, a blanket of an activating gas is established; and
■ supply of the feed is restarted.

2. A process according to claim 1, in which the three-phase bed is a "slurry" type bed.

3. A process according to claim 1 or claim 2, in which the amount of inhibiting compounds in the inhibiting gas is more than 10% by volume.

4. A process according to any one of claims 1 to 3, in which during step a):
● supply of the feed is halted;
● the inhibiting gas is sent to the reaction zone; and
● the solid catalyst particles are maintained in suspension in the reaction zone by means of said inhibiting gas.

5. A process according to any one of claims 1 to 4, in which at least part of the gas phase from the reaction zone is recycled to a lower part of said reaction zone.

6. A process according to claim 5, in which, during step a):
● supply of the feed is halted;
● the inhibiting gas is sent to the reaction zone while maintaining the gas phase recycle to a lower portion of the reaction zone until the inhibiting gas blanket is established; and
● the solid catalyst particles are maintained in suspension in the reaction zone by maintaining the inhibiting gas recycle to a lower portion of the reaction zone.

7. A process according to claim 5, in which, during step a):
● as appropriate, the ratio of the quantity of hydrogen to the quantity of carbon monoxide in the feed, H₂/CO, is adjusted to a value which is lower than that of the usage ratio of the reaction comprised between 2.0 and 2.4;
● supply of the feed is halted while maintaining the recycle of the gas phase to the lower portion of said reaction zone until the inhibiting gas blanket is established; and
● the solid catalyst particles are maintained in suspension by maintaining the recycle of the inhibiting gas to a lower portion of the reaction zone.

8. A process according to any one of claims 1 to 7, in which establishing the blanket of the activating gas and restarting the supply of the feed are two successive steps of step b).

9. A process according to any one of claims 1 to 8, in which the amount of hydrogen in the activating gas of step b) is more than 20% by volume.

10. A process according to any one of claims 1 to 9, in which, during step a), the temperature in the reaction zone is reduced from an initial value, i.e. the temperature before step a) comprised between 200°C and 400°C, to a value of more than 180°C and, during step b), the temperature in the reaction zone is increased to a value at least 10°C greater than the initial value.

11. A process according to claim 10 in which, during step a), the temperature in the reaction zone is reduced to a value of more than 180°C and 220°C or less.

12. A process according to any one of claims 1 to 11, in which the catalyst is based on cobalt.

13. A process according to any one of claims 1 to 12, in which the reaction zone further comprises a silicone-based antifoaming agent.

## Patentansprüche

1. Verfahren zur provisorischen Unterbrechung einer Reaktion vom Typ Fischer-Tropsch, die in einem Reaktionsbereich mit Dreiphasenbett, welches eine Flüssigphase, eine Gasphase und feststoffliche Katalysatorpartikel aufweist, wobei letztere in Suspension gehalten werden, an einer Charge vorgenommen wird, welche mindestens Kohlenmonoxid und Wasserstoff aufweist, wobei das Verfahren einen Schritt a) der Unterbrechung der Reaktion und einen Schritt b) des Wiederanfahrens der Reaktion umfasst, während derer die feststofflichen Katalysatorpartikel in dem Reaktionsbereich in Suspension gehalten werden;
a) während des Schrittes der Unterbrechung der Reaktion:
- wird das Einspeisen der Charge eingestellt, und
- in dem Reaktionsbereich wird eine Deckschicht aus einem hemmend wirkenden Gas etabliert, das weniger als 1 Volumen-% an Wasserstoff und mindestens 5 Volumen-% an Kohlenmonoxid aufweist, und
b) während des Schrittes des Wiederanfahrens der Reaktion:
- wird in dem Reaktionsbereich eine Deckschicht aus einem aktivierend wirkenden Gas etabliert, und
- das Einspeisen der Charge wird wieder aufgenommen.

2. Verfahren nach Anspruch 1, wobei das Dreiphasenbett ein Bett von "Aufschlämmungs"-Typ ist.

3. Verfahren nach einem beliebigen der Ansprüche 1 oder 2, wobei der Gehalt an hemmend wirkenden Verbindungen im hemmend wirkenden Gas höher als 10 Volumen-% ist.

4. Verfahren nach einem beliebigen der Ansprüche 1 bis 3, wobei während des Schrittes a):
- das Einspeisen der Charge eingestellt wird,
- das hemmend wirkende Gas in den Reaktionsbereich eingeleitet wird, und
- die feststofflichen Katalysatorpartikel mit Hilfe des hemmend wirkenden Gases im Reaktionsbereich in Suspension gehalten werden.

5. Verfahren nach einem beliebigen der Ansprüche 1 bis 4, wobei mindestens ein Teil der Gasphase des Reaktionsbereichs in einen unteren Abschnitt des Reaktionsbereichs zurückgeführt wird.

6. Verfahren nach Anspruch 5, wobei während des Schrittes a)
- das Einspeisen der Charge eingestellt wird,
- das hemmend wirkende Gas in den Reaktionsbereich eingeleitet wird, wobei die Rückführung der Gasphase in einen unteren Abschnitt des Reaktionsbereich aufrechterhalten wird, bis eine Deckschicht aus hemmend wirkendem Gas hergestellt ist, und
- die feststofflichen Katalysatorpartikel dank der Aufrechterhaltung der Rückführung des hemmend wirkenden Gases in einen unteren Abschnitt des Reaktionsbereichs in Suspension gehalten werden.

7. Verfahren nach Anspruch 5, wobei während des Schrittes a)
- das Verhältnis der Wasserstoffmenge zur Kohlenmonoxidmenge in der Charge, H₂/CO, gegebenenfalls auf einem Wert eingestellt wird, der geringer als derjenige des üblichen Verhältnisses im Reaktionsansatz ist, welcher im Bereich von 2,0 bis 2,3 liegt,
- das Einleiten der Charge eingestellt wird, wobei die Rückführung der Gasphase des Reaktionsbereichs in den unteren Abschnitt des Reaktionsbereich aufrechterhalten wird, bis eine Deckschicht aus hemmend wirkendem Gas hergestellt ist, und
- die feststofflichen Katalysatorpartikel dank der Aufrechterhaltung der Rückführung des hemmend wirkenden Gases in einen unteren Abschnitt des Reaktionsbereichs in Suspension gehalten werden.

8. Verfahren nach einem beliebigen der Ansprüche 1 bis 7, wobei es sich bei der Herstellung der Deckschicht aus aktivierend wirkendem Gas und beim Wiederanfahren des Einleitens der Charge um zwei Schritte handelt, die auf den Schritt b) folgen.

9. Verfahren nach einem beliebigen der Ansprüche 1 bis 8, wobei der Gehalt an Wasserstoff im aktivierend wirkenden Gas des Schrittes b) mindestens 20 Volumen-% beträgt.

10. Verfahren nach einem beliebigen der Ansprüche 1 bis 9, wobei während des Schrittes a) die Temperatur im Reaktionsbereich von einem Ausgangswert, das heißt, von der Temperatur vor dem Schritt a), welche im Bereich von 200 °C bis 400 °C liegt, auf einen Wert abgesenkt wird, der höher als 180 °C ist, und die Temperatur im Reaktionsbereich während des Schrittes b) auf einen Wert erhöht wird, der mindestens 10 °C höher als der Ausgangswert ist.

11. Verfahren nach Anspruch 10, wobei während des Schrittes a) die Temperatur im Reaktionsbereich auf einen Wert abgesenkt wird, der höher als 180 °C ist und höchstens 220 °C beträgt.

12. Verfahren nach einem beliebigen der Ansprüche 1 bis 11, wobei der Katalysator auf Kobalt basiert.

13. Verfahren nach einem beliebigen der Ansprüche 1 bis 12, wobei der Reaktionsbereich darüber hinaus einen Schaumverhüter auf Basis von Silikon aufweist.
